**Europäisches Patentamt**

**European Patent Office**

**Office européen des brevets**

(19)

(11) Veröffentlichungsnummer: **0 233 633 B1**

(12)

# EUROPÄISCHE PATENTSCHRIFT

(45) Veröffentlichungstag der Patentschrift: **11.12.91**

(51) Int. Cl.5: **B32B 27/08**

(21) Anmeldenummer: **87102227.3**

(22) Anmeldetag: **17.02.87**

(54) Dekorative Verbundfolie für Oberflächenbeschichtungen,deren Verwendung in einem Mehrschichtverbund,sowie Verfahren zum Herstellen eines solchen Mehrschichtverbundes.

(30) Priorität: **18.02.86 AT 422/86**

(43) Veröffentlichungstag der Anmeldung:
**26.08.87 Patentblatt 87/35**

(45) Bekanntmachung des Hinweises auf die
Patenterteilung:
**11.12.91 Patentblatt 91/50**

(84) Benannte Vertragsstaaten:
**AT BE CH DE ES FR GB GR IT LI NL SE**

(56) Entgegenhaltungen:
**EP-A- 0 133 821**
**DE-A- 1 816 987**
**FR-A- 1 481 368**
**GB-A- 2 084 513**

(73) Patentinhaber: **ISOVOLTA Österreichische
Isolierstoffwerke Aktiengesellschaft
Industriezentrum-Süd
A-2351 Wiener Neudorf(AT)**

(72) Erfinder: **Fialla, Peter, Dipl.-Ing.
Fischer-von-Erlachgasse 31
A-2344 Maria Enzerdorf(AT)**

(74) Vertreter: **Stampfer, Heinz
ISOVOLTA Österreichische Isolierstoffwerke
AG Industriezentrum-Süd
A-2351 Wiener Neudorf(AT)**

## Beschreibung

Die Erfindung betrifft eine dekorative Verbundfolie, die eine an einer Seite mit einem Oberflächendekor versehene Kunststoffolie aufweist, welche an der Dekorseite mit einer im wesentlichen aus Polyvinylfluorid bestehenden transparenten Kunststoffolie verbunden ist, sowie deren Verwendung in einem Mehrschichtverbund, der insbesondere als dekoratives Oberflächenlaminat oder dekoratives Bauteil beim Innenausbau z.B. von öffentlichen Gebäuden oder von Fahrzeugen, Schiffen und Flugzeugen verwendet werden kann. Die Erfindung betrifft ferner ein vorteilhaftes Verfahren zum Herstellen des genannten Mehrschichtverbundes.

Eine dekorative Verbundfolie dieser Art ist aus der GB-A-2,084.513 bekannt, in der ein Laminat aus einer Folie aus Polyvinylchlorid, auf die mit Farbe oder Tinte eine färbige Schicht aufgebracht ist, und einer transparenten, wetterbeständigen Oberflächenschicht aus Polyfluorethylen oder Vinylfluoridkunststoffen beschrieben ist. Die Laminatschichten sind miteinander über eine Kleberschicht verbunden. Solche dekorativen Verbundfolien werden zum Beispiel auf Karosserieteile von Kraftfahrzeugen aufgebracht.

Als dekorative Oberflächenbauteile beim Innenausbau von Kriegsschiffen wurden bisher in vielen Fällen Stahlbleche verwendet, die eine mit einem dekorativen Aufdruck versehene PVC-Beschichtung aufwiesen. Solche beschichtete Stahlbleche haben den Vorteil, daß man sie biegen, zuschneiden und falzen kann, ohne daß die PVC-Beschichtung sich ablöst oder Risse bekommt.

Erfahrungen der letzten Jahre haben nun gezeigt, daß beim Auftreten von Bränden auf Kriegsschiffen, deren Innenausbau solche mit PVC beschichtete Stahlbleche aufwies, die betroffene Mannschaft durch die gasförmigen toxischen Zersetzungsprodukte des PVC's eher außer Gefecht gesetzt wurde als durch die direkte Hitzeeinwirkung des Brandes. Darüber hinaus hat man die Erfahrung gemacht, daß durch die bei der Zersetzung des PVC's entstehenden Salzsäuredämpfe elektronische Geräte leicht gestört bzw. defekt werden können.

Der Erfindung liegt nun die Aufgabe zugrunde, eine dekorative Verbundfolie für Oberflächenbeschichtungen der eingangs genannten Art sowie deren Verwendung in einem Mehrschichtverbund anzugeben, wobei dieser Mehrschichtverbund bei etwa gleich guter Be- bzw. Verarbeitbarkeit eine geringere Entflammbarkeit und im Brandfall eine geringere Entwicklung von toxischen Gasen aufweist als die bekannten dekorativen Stahlbleche, deren Beschichtungen Polyvinylchlorid enthalten und die einen besonders einfachen Aufbau haben.

Diese Aufgabe wird zunächst in der erfindungsgemäßen dekorativen Verbundfolie gelöst, die dadurch gekennzeichnet ist, daß die Kunststoffolie aus einem Elastomer auf Basis eines Polyurethans besteht, auf welcher das Oberflächendekor durch einen dekorativen Aufdruck gebildet ist und daß die mit dem dekorativen Aufdruck versehene Kunststoffolie ohne Einfügung einer Kleberschicht mit der transparenten Kunststoffolie verbunden ist. Dabei kann die transparente Kunststoffolie eine Dicke im Bereich zwischen 15 und 100 μm, vorzugsweise aber zwischen 15 und 50 μm aufweisen, und/oder es kann die Elastomerfolie auf Basis von Polyurethan vorteilhaft eine Dicke im Bereich zwischen 25 und 200 μm aufweisen.

Bezüglich Dekorfolien, bei denen das Dekor in Form eines Druckes aufgebracht wird, ist die FR-A-1,481.368 zu nennen, bei welcher dieses Dekor aber - im Gegensatz zur Erfindung - nicht durch Anbringen einer zusätzlichen Transparentfolie gegen äußere Einflüsse geschützt ist.

Nach vorteilhaften Ausgestaltungen der erfindungsgemäßen Verbundfolie ist der dekorative Aufdruck auf der Elastomerfolie mittels Tiefdruck oder mittels Siebdruck erfolgt.

Gemäß einer anderen vorteilhaften Ausgestaltung der erfindungsgemäßen Verbundfolie ist diese an ihrer Rückseite mit einer, vorteilhaft aus einer Heißschmelzkleberschicht bestehenden Bindemittelschicht verbunden. Dabei kann der Heißschmelzkleber vorteilhaft einer auf Basis eines gesättigten Copolyesters sein.

Die Erfindung betrifft ferner eine vorteilhafte Verwendung der erfindungsgemäßen dekorativen Verbundfolie, die dadurch gekennzeichnet ist, daß sie in einem Mehrschichtverbund als Oberflächenbeschichtung eines gegebenenfalls folien- oder plattenförmigen Trägerkörpers verwendet wird. Dabei kann die verwendete Verbundfolie vorteilhaft auf einer Oberfläche des Trägerkörpers aufgeklebt sein.

In vorteilhaften Ausgestaltungen der erfindungsgemäßen Verwendung besteht der plattenförmige Trägerkörper aus einem Stahlblech oder aus einem Aluminiumblech.

Die Erfindung betrifft schließlich ein vorteilhaftes Verfahren zum Herstellen eines Mehrschichtverbundes mit dekorativen Oberflächenschichten, deren Schichtaufbau mit dem der erfindungsgemäßen Verbundfolie übereinstimmt.

Dieses erfindungsgemäße Verfahren ist dadurch gekennzeichnet, daß ein folien- oder plattenförmiger Trägerkörper, gegebenenfalls eine Heißschmelzkleberfolie, die bedruckte Elastomerfolie und die transparente Kunststoffolie zu einem Paket verschlichtet und dieses Paket in einer Presse heiß verpreßt wird, wobei sich die Elemente des Paketes miteinander zum Mehrschichtverbund verbinden, der danach rückgekühlt und der Presse entnommen wird.

Gemäß einer vorteilhaften Ausgestaltung dieses erfindungsgemäßen Verfahrens weist die der transparenten Kunststoffolie des Pakets zugewandte Preßoberfläche eine reliefartige Struktur auf, die beim Heißverpressen in die dekorative Oberfläche des zu erzeugenden Mehrschichtverbundes eingeprägt wird.

Die Erfindung wird nachstehend anhand der Figuren und zwei Beispielen eingehend erläutert.

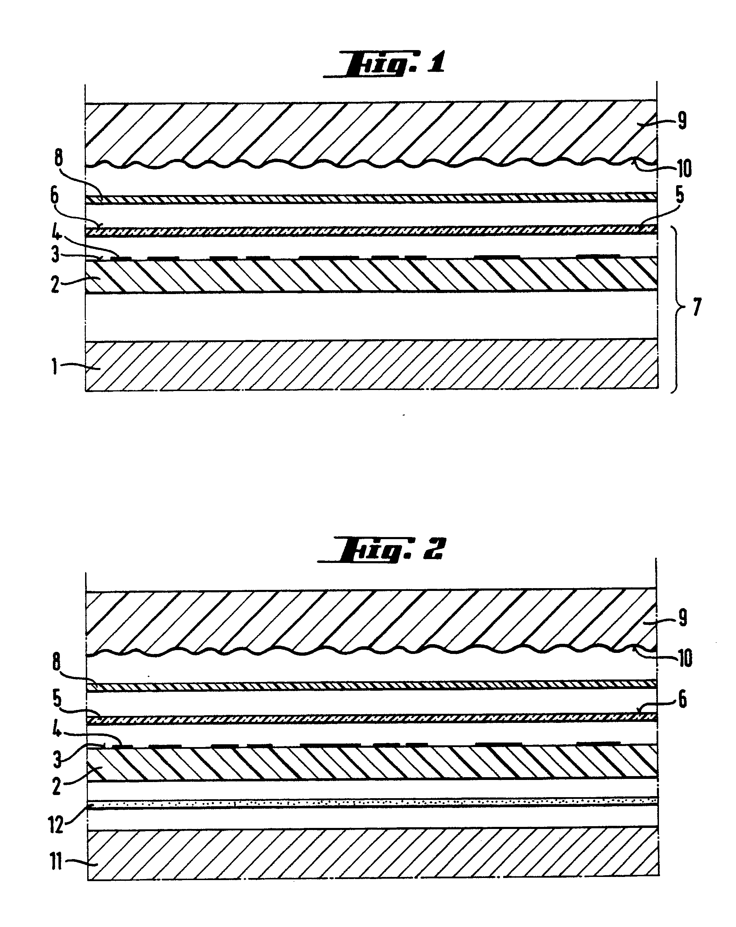

Fig. 1 zeigt in einer Explosionsdarstellung die folien-bzw. plattenförmigen Elemente, die gemäß einem ersten Beispiel des Verfahrens zum Herstellen eines erfindungsgemäßen Mehrschichtverbundes zu einem Paket verschlichtet werden. Auf ein Stahlblech 1 der Qualität 1.4301 und einer Dicke von 0,5 mm folgt eine 0,1 mm dicke extrudierte Folie 2 aus einem Elastomer auf Basis eines Polyurethans, das an der Oberseite 3 mit einem z.B. durch ein Siebdruckverfahren hergestellten Aufdruck 4 versehen ist, und darauf eine 25 $\mu$m dicke transparente Folie 5 aus einem ungefüllten Polyvinylfluorid (PVF), die an der Oberseite 6 eine Hochglanzoberfläche aufweist. Auf die mit 7 angedeuteten Elemente, welche zum Aufbau des Mehrschichtverbundes dienen, folgt zunächst eine 25 um dicke Trennfolie 8 aus PVF oder Polypropylen (PP), welche an beiden Seiten eine matte Oberfläche aufweist, sowie eine folienartige Kunststoffmatrize 9 mit einer reliefartigen Oberflächenstruktur an ihrer Preßoberfläche 10.

Mehrere dieser Pakete werden nun jeweils unter Einfügung von Polsterpapieren so übereinandergestapelt, daß die Kunststoffmatrize 9 abwechselnd einmal an der Oberseite und einmal an der Unterseite des Paketes zu liegen kommt. Dieser Paketstapel wird nun in eine Rückkühlpresse verbracht und bei einem Preßdruck von ca. 400 N/cm² bei einer Preßplattentemperatur von etwa 170° C, welche innerhalb des Preßzyklus während etwa 15 min gehalten wird, verpreßt. Bei dieser Temperatur von 170° C wird die Elastomer-Folie 2 klebrig und verbindet sich mit dem Stahlblech 1 und der erweichten PVF-Folie 5. Dabei wird die Oberflächenstruktur der Preßoberfläche 10 durch die Trennfolie 8 hindurch unter Verformung der transparenten PVF-Folie zu einem großen Teil auch noch in die Elastomerfolie eingeprägt. Nach Rückkühlung der Preßplatten auf 40° C wird der Paketstapel aus der Presse ausgebracht, entschlichtet und dabei die fertigen Mehrschichtverbunde entnommen. Anschließend wird auf die dekorative Seite des Mehrschichtverbundes ein Schutzlack auf PVC-Basis aufgetragen, der sich nach einer Bearbeitung bzw. der Montage des Mehrschichtverbundes als Folie leicht abziehen läßt.

Wie aus dem vorstehend beschriebenen Verfahren hervorgeht, wird trotz des auf der Polyurethanelastomerfolie 2 angebrachten dekorativen Aufdrucks 4 überraschenderweise keine besondere Kleberschicht zu ihrer Verbindung mit der transparenten Kunststoffolie 5 benötigt.

Die dekorativen Oberflächen der so hergestellten Mehrschichtverbunde weisen eine hohe Beständigkeit gegen extreme klimatische Einflüsse auf. Ihre Beständigkeit gegen aggressive Flüssigkeiten wie Reinigungsmittel, Öle, Benzine und dgl. ist höher als die der Oberflächen der eingangs genannten bekannten Mehrschichtverbunde.

Fig. 2 zeigt in einer weiteren Explosionsdarstellung die Elemente, welche gemäß einen zweiten Beispiel des Verfahrens zum Herstellen eines erfindungsgemäßen Mehrschichtverbundes zu einem Paket verschlichtet werden. Auf ein Aluminiumblech 11 der Qualität ALMg3 folgt eine 50 $\mu$m dicke Heißschmelzkleberfolie 12 auf Basis eines gesättigten Copolyesters, und darauf - analog wie gemäß Fig. 1 - die bedruckte Elastomerfolie 2, die transparente PVF-Folie 5, die Trennfolie 8 und schließlich die Kunststoffmatrize 9.

Das Verfahren wird analog wie anhand von Fig. 1 beschrieben durchgeführt, mit dem Unterschied, daß das Heißverpressen bei 160° C erfolgt und die Verbindung zwischen dem Aluminiumblech 10 und der Elastomerfolie 2 nun nicht mehr direkt, sondern durch den bei der Preßtemperatur aufschmelzenden Heißschmelzkleber der Heißschmelzkleberfolie 11 hergestellt wird.

Solche Mehrschichtverbunde, deren Herstellung anhand der Figuren 1 und 2 beschrieben sind, lassen sich biegen, zuschneiden und falzen, ohne daß sich die dekorative Oberflächenschicht von dem Stahl- bzw. Aluminiumblech löst oder Risse bekommt.

Ganz allgemein werden zum Bedrucken der Elastomer-Folie in erster Linie Tiefdruck- und Siebdruckverfahren eingesetzt, wobei Tiefdruckverfahren z.B. zur Herstellung von Holzimitationsdekoren und Siebdruckverfahren bei der Herstellung von Ornamenten zur Anwendung gelangen.

Die Erfindung betrifft auch eine dekorative Verbundfolie, die aus der bedruckten Elastomer-Folie und der mit dieser verbundenen transparenten Kunststoffolie, sowie gegebenenfalls aus einer an der Verbundfolien-Rückseite angebrachten Bindemittelschicht oder -folie besteht. Die Herstellung der Verbundfolie erfolgt dabei vorteilhaft analog wie anhand der Figuren beschrieben durch Heißverpressen der zum Aufbau der Verbundfolie dienenden Einzelfolien. Solche dekorativen Verbundfolien werden dann nachträglich auf ein Trägermaterial , z.B. wie eine Tapete auf Wände oder Wandelemente, aufgeklebt.

**Patentansprüche**

1. Dekorative Verbundfolie, die eine an einer Seite mit einem Oberflächendekor versehene Kunststoffolie aufweist, welche an der Dekorseite mit einer im wesentlichen aus Polyvinylfluorid bestehenden transparenten Kunststoffolie (5) verbunden ist, dadurch gekennzeichnet, daß die Kunststoffolie (2) aus einem Elastomer auf Basis eines Polyurethans besteht, auf welcher das Oberflächendekor durch einen dekorativen Aufdruck (4) gebildet ist und daß die mit dem dekorativen Aufdruck versehene Kunststoffolie ohne Einfügung einer Kleberschicht mit der transparenten Kunststoffolie (5) verbunden ist.

2. Verbundfolie nach Anspruch 1, dadurch gekennzeichnet, daß die transparente Kunststoffolie (5) eine Dicke im Bereich zwischen 15 und 100 $\mu$m aufweist.

3. Verbundfolie nach Anspruch 1 oder 2, dadurch gekennzeichnet, daß die Elastomerfolie (2) auf Basis von Polyurethan eine Dicke im Bereich zwischen 25 und 200 $\mu$m aufweist.

4. Verbundfolie nach einem der Ansprüche 1 bis 3, dadurch gekennzeichnet, daß der dekorative Aufdruck (4) auf der Elastomerfolie (2) mittels Tiefdruck erfolgt ist.

5. Verbundfolie nach einem der Ansprüche 1 bis 3, dadurch gekennzeichnet, daß der dekorative Aufdruck (4) auf der Elastomerfolie (2) mittels Siebdruck erfolgt ist.

6. Verbundfolie, nach einem der Ansprüche 1 - 5 dadurch gekennzeichnet, daß die Rückseite der bedruckten Elastomerfolie (2) mit einer Bindemittelschicht verbunden ist.

7. Verbundfolie nach Anspruch 6, dadurch gekennzeichnet, daß die Bindemittelschicht eine Heißschmelzkleberschicht ist.

8. Verbundfolie nach Anspruch 7, dadurch gekennzeichnet, daß der Heißschmelzkleber einer auf Basis eines gesättigten Copolyesters ist.

9. Verwendung einer dekorativen Verbundfolie als Oberflächenbeschichtung in einem Mehrschichtverbund, dadurch gekennzeichnet, daß eine dekorative Verbundfolie nach einem der Ansprüche 1 - 8 verwendet wird.

10. Verwendung nach Anspruch 9, dadurch gekennzeichnet, daß in dem Mehrschichtverbund die dekorative Verbundfolie als Oberflächenbeschichtung eines folien- oder plattenförmigen Trägerkörpers verwendet wird.

11. Verwendung nach Anspruch 10, dadurch gekennzeichnet, daß die verwendete Verbundfolie auf einer Oberfläche des Trägerkörpers aufgeklebt ist.

12. Verwendung nach Anspruch 10 oder 11, dadurch gekennzeichnet, daß der plattenförmige Trägerkörper aus einem Aluminiumblech (11) besteht.

13. Verwendung nach Anspruch 10 oder 11, dadurch gekennzeichnet, daß der plattenförmige Trägerkörper aus einem Stahlblech (1) besteht.

14. Verfahren zum Herstellen eines Mehrschichtverbundes, bei dem ein Trägermaterial zumindest an einer Seite mit einer dekorativen Folie beschichtet wird, dadurch gekennzeichnet, daß die Beschichtung mit einem Schichtaufbau erfolgt, der dem einer dekorativen Verbundfolie nach einem der Ansprüche 1 - 8 entspricht.

15. Verfahren zum Herstellen eines Mehrschichtverbundes nach Anspruch 14, dadurch gekennzeichnet, daß ein folien- oder plattenförmiger Trägerkörper, gegebenenfalls eine Heißschmelzkleberfolie (12),die bedruckte Elastomerfolie (2) und die transparente Kunststoffolie (5) zu einem Paket verschlichtet und dieses Paket in einer Presse heiß verpreßt wird, wobei sich die Elemente des Paketes miteinander zum Mehrschichtverbund verbinden, der danach rückgekühlt und der Presse entnommen wird.

16. Verfahren nach Anspruch 14 oder 15, dadurch gekennzeichnet, daß die der transparenten Kunststoffolie des Pakets zugewandte Preßoberfläche eine reliefartige Struktur (10) aufweist, die beim Heißverpressen in die dekorative Oberfläche des zu erzeugenden Mehrschichtverbundes eingeprägt wird.

17. Verbundfolie nach Anspruch 2, dadurch gekennzeichnet, daß die transparente Kunststoffolie (5) eine Dicke im Bereich zwischen 15 und 50 $\mu$m aufweist.

## Claims

1. A decorative composite film, which has a plastic film provided on one side with a surface decoration, which film is connected on the decoration side to a transparent plastic film (5) consisting substantially of polyvinylfluoride, characterised in that the plastic film (2) consists of an elastomer on the basis of a polyurethane, on which the surface decoration is formed by a decorative print (4), and that the plastic film provided with the decorative print is connected to the transparent plastic film (5) without the insertion of an adhesive layer.

2. A composite film according to Claim 1, characterised in that the transparent plastic film (5) has a thickness in the range of 15 to 100 $\mu$m.

3. A composite film according to Claim 1 or 2, characterised in that the elastomer film (2) on the basis of polyurethane has a thickness in the range of 25 to 200 $\mu$m.

4. A composite film according to one of Claims 1 to 3, characterised in that the decorative print (4) on the elastomer film (2) is made by means of gravure printing.

5. A composite film according to one of Claims 1 to 3, characterised in that the decorative print (4) on the elastomer film (2) is made by means of screen printing.

6. A composite film according to one of Claims 1 to 5, characterised in that the rear side of the printed elastomer film (2) is connected to a binder layer.

7. A composite flint according to Claim 6, characterised in that the binder layer is a layer of hot-melt adhesive.

8. A composite film according to Claim 7, characterised in that the hot-melt adhesive is one on the basis of a saturated copolyester.

9. The use of a decorative composite film as a surface coating in a multi-layer composite, characterised in that a decorative composite film according to one of Claims 1 - 8 is used.

10. The use according to Claim 9, characterised in that in the multi-layer composite the decorative composite film is used as a surface coating of a film-like or plate-like backing.

11. The use according to Claim 10, characterised in that the composite film used is glued to a surface of the substrate.

12. The use according to Claim 10 or 11, characterised in that the plate-like substrate consists of an aluminium sheet (11).

13. The use according to Claim 10 or 11, characterised in that the plate-like substrate consists of a steel sheet (1).

14. A process for producing a multi-layer composite, in which a substrate material is coated at least on one side with a decorative film, characterised in that the coating takes place with a layered structure which corresponds to that of a decorative composite film according to one of Claims 1 - 8.

15. A process for producing a multi-layer composite according to Claim 14, characterised in that a film-like or plate-like substrate optionally a hot-melt adhesive film (12), the printed elastomer film (2) and the transparent plastic film (5) are arranged in a packet and this packet is hot-pressed in a press, the elements of the packet joining together to form the multi-layer composite, which is then re-cooled and removed from the press.

16. A process according to Claim 14 or 15, characterised in that the pressing surface facing the transparent plastic film of the packet has a relief-type structure (10) which, during hot-pressing, is embossed into the decorative surface of the multi-layer composite to be produced.

17. A composite film according to Claim 2, characterised in that the transparent plastic film (5) has a thickness in the range of 15 to 50 $\mu$m.

## Revendications

1. Film composite décoratif qui comporte sur une face un feuil en matière plastique muni d'un décor de surface, ledit feuil étant relié, sur la face munie du décor, à une pellicule transparente en matière plastique (5) constituée pour l'essentiel de polyfluorure de vinyle, caractérisé en ce que le feuil en matière plastique (2) est constitué d'un élastomère à base de polyuréthane, sur lequel le décor de surface est formé par une impression décorative (4) et en ce que le feuil de matière plastique muni de l'impression décorative est relié à la pellicule transparente en matière plastique (5) sans interposition d'une couche de colle.

2. Film composite selon la revendication 1, caractérisé en ce que la pellicule transparente en matière plastique (5) présente une épaisseur comprise entre 15 et 100 $\mu$m.

3. Film composite selon la revendication 1 ou 2, caractérisé en ce que le feuil élastomère (2) à base de polyuréthane présente une épaisseur comprise entre 25 et 200 $\mu$m.

4. Film composite selon l'une des revendications 1 à 3, caractérisé en ce que l'impression décorative (4) est réalisée sur le film élastomère (2) par impression en taille douce.

5. Film composite selon l'une des revendications 1 à 3, caractérisé en ce que l'impression décorative (4) sur le feuil élastomère (2) est réalisée par sérigraphie.

6. Film composite selon l'une des revendications 1 à 5, caractérisé en ce que la face arrière du feuil élastomère (2) muni d'une impression, est reliée à l'aide d'une couche de liant.

7. Film composite selon la revendication 6, caractérisé en ce que la couche de liant est une couche de colle fondant à chaud (hot melt).

8. Film composite selon la revendication 7, caractérisé en ce que la colle fondant à chaud est réalisée à base d'un copolyester saturé.

9. Application d'un film composite décoratif comme revêtement de surface dans un composite multicouche, caractérisée en ce que l'on utilise un film composite décoratif selon l'une des revendications 1 à 8.

10. Application selon la revendication 9, caractérisée en ce que, pour la liaison multicouche, l'on utilise le film composite décoratif comme revêtement de surface d'un support en forme de feuille ou de plaque.

11. Application selon la revendication 10, caractérisée en ce que le film composite utilisé est collé sur une surface du support.

12. Application selon la revendication 10 ou 11, caractérisée en ce que le support en forme de plaque est constitué par une tôle d'aluminium (11).

13. Application selon la revendication 10 ou 11, caractérisée en ce que le support en forme de plaque est constitué par une tôle d'acier (1).

14. Procédé de fabrication d'une liaison multicouche, dans lequel on recouvre un matériau support, sur au moins une face, d'un film décoratif, caractérisé en ce que l'on réalise le revêtement en formant une couche qui est conforme à un film composite décoratif selon l'une des revendications 1 à 8.

15. Procédé de fabrication d'un composite multicouche selon la revendication 14, caractérisé en ce que l'on empile en un paquet: un support en forme de feuille ou de plaque, le cas échéant un film de colle fondant à chaud (hot melt), le feuil d'élastomère imprimé (2) et la pellicule transparente en matière plastique (5) et l'on presse à chaud ce paquet dans une presse, de manière que les éléments du paquet soient reliés les uns aux autres en un composite multicouche qui est ensuite refroidi et sorti de la presse.

16. Procédé selon la revendication 14 ou 15, caractérisé en ce que la surface de la presse tournée vers la pellicule transparente en matière plastique du paquet présente une structure en relief (10) qui, au cours du pressage à chaud, s'imprime sur la surface décorative de la liaison multicouche à réaliser.

17. Film composite selon la revendication 2, caractérisé en ce que la pellicule transparente en matière plastique (5) présente une épaisseur comprise entre 15 et 50 $\mu$m.

## Fig. 1

## Fig. 2